Europäisches Patentamt

European Patent Office

Office européen des brevets

(19)

(11) Veröffentlichungsnummer : **0 184 734**
**B1**

# (12) EUROPÄISCHE PATENTSCHRIFT

(45) Veröffentlichungstag der Patentschrift :
20.01.88

(21) Anmeldenummer : 85115171.2

(22) Anmeldetag : 29.11.85

(51) Int. Cl.⁴ : **C 09 D   5/00**, C 08 L 27/06,
     C 08 L 33/06

(54) Verfahren zur Herstellung von wasserverdünnbaren Beschichtungsmitteln für mineralische und bituminöse Untergründe.

(30) Priorität : 05.12.84 AT 3854/84

(43) Veröffentlichungstag der Anmeldung :
18.06.86 Patentblatt 86/25

(45) Bekanntmachung des Hinweises auf die Patenterteilung : 20.01.88 Patentblatt 88/03

(84) Benannte Vertragsstaaten :
CH DE FR GB IT LI

(56) Entgegenhaltungen :
EP-A- 0 066 108
EP-A- 0 133 949

(73) Patentinhaber : Vianova Kunstharz Aktiengesellschaft
A-8402 Werndorf (AT)

(72) Erfinder : Zückert, Bertram, Dr.
Krottendorferstrasse 90
A-8052 Graz (AT)
Erfinder : Tulacs, Laszlo, D.I.
Münzgrabengürtel 21
A-8010 Graz (AT)
Erfinder : Klintschar, Gerfried, Dr.
Rieshang 20
A-8010 Graz (AT)
Erfinder : Manger, Hans
Rudolfstrasse 55
A-8010 Graz (AT)
Erfinder : Labenbacher, Adolf
Stiftingtalstrasse 198
A-8010 Graz (AT)

(74) Vertreter : Pitter, Robert, Dr. et al
Leechgasse 21 Postfach 191
A-8010 Graz (AT)

## Beschreibung

Die EP-A1-0 133 949 beschreibt ein Verfahren zur Herstellung wasserverdünnbarer Beschichtungsmittel für mineralische und bituminöse Untergründe, insbesonders für die Herstellung von Straßenmarkierungen und die Beschichtung von Fassaden, welches dadurch gekennzeichnet ist, daß man eine Mischung aus

(A) 30-90, vorzugsweise 50-75 Gew.-% eines physikalisch trocknenden Polymeren, vom Typ der Acrylpolymeren oder -copolymeren, Vinylpolymeren oder -copolymeren, Chlor- oder Cyclokautschuk oder bituminösen Massen,

(B) 10-50, vorzugsweise 15-25 Gew.-% eines nach Salzbildung mit Basen bzw. Säuren wasserlöslichen, oxidativ trocknenden Alkydharzes und/oder eines Acryl- und/oder eines Vinylcopolymeren und/oder eines Epoxid-Amin-Adduktes und gegebenenfalls

(C) 15-35, vorzugsweise 20-30 Gew.-% eines Weichmachungsmittels,

gegebenenfalls nach Zusatz eines organischen, vorzugsweise nichtwassermischbaren Lösungsmittels in eine homogene Phase überführt, in 80-250, vorzugsweise 90-120 Gew.-% (bezogen auf das eingesetzte Festharz) Wasser emulgiert und die salzbildenden Gruppen der Komponente (B) mit Basen bzw. Säuren neutralisiert, wobei das Verhältnis zwischen der Summe der Komponenten (A) + (C) und der Komponente (B) zwischen 8,5 : 1 und 1,5 : 1, vorzugsweise zwischen 6,5 : 1 und 3 : 1 liegt.

Weiters können als Komponente (B) auch durch Salzbildung wasserlösliche Alkydharze eingesetzt werden, welche durch gesättigte Fettsäuren modifizierte Alkydharze und/oder ölfreie Polyester sind.

Es wurde nun gefunden, daß man Bindemittel mit verbesserter Dispersionsstabilität erhält, wenn man als Komponente (A) Polymere einsetzt, welche in geringer Menge basische Gruppen aufweisende Monomerbausteine enthalten.

Die Erfindung betrifft demgemäß ein Verfahren zur Herstellung wasserverdünnbarer Beschichtungsmittel für mineralische und bituminöse Untergründe, insbesonders für die Herstellung von Straßenmarkierungen und die Beschichtung von Fassaden, wobei man eine Mischung aus

(A) mindestens 30 Gew.-%, vorzugsweise 50-75 Gew.-% eines physikalisch trocknenden Polymeren, vom Typ der Acryl- und/oder Vinylcopolymeren, Chlor- oder Cyclokautschuk oder bituminösen Massen,

(B) 10-50, vorzugsweise 15-25 Gew.-% eines nach Salzbildung mit Basen bzw. Säuren wasserlöslichen, oxidativ trocknenden Alkyldharzes und/oder eines Acryl- und/oder eines Vinylcopolymeren und/oder eines Epoxid-Amin-Adduktes und gegebenenfalls

(C) 15-35, vorzugsweise 20-30 Gew.-% eines Weichmachungsmittels,

gegebenenfalls nach Zusatz eines organischen, vorzugsweise nichtwassermischbaren Lösungsmittels in eine homogene Phase überführt, in 80-250, vorzugsweise 90-120 Gew.-% (bezogen auf das eingesetzte Festharz) Wasser emulgiert und die salzbildenden Gruppen der Komponente (B) mit Basen bzw. Säuren neutralisiert, wobei das Verhältnis zwischen der Summe der Komponenten (A) + (C) und der Komponente (B) zwischen 8,5 : 1 und 1,5 : 1, vorzugsweise zwischen 6,5 : 1 und 3 : 1 liegt und ist dadurch gekennzeichnet, daß man als Komponente (A) nichtwasserverdünnbare organische Polymere vom Typ der Acryl- und/oder Vinylcopolymeren, welche 0,5 bis 5 Gew.-% basische Gruppen aufweisende Monomerbausteine im Molekül enthalten, allein oder zusammen mit Chlor- oder Cyclokautschuk oder bituminöse Massen einsetzt.

Es wird angenommen, daß durch diese Maßnahme die Verträglichkeit mit der Komponente (B) verbessert wird und dadurch die Stabilität der Dispersion sowohl unter ungünstigen Bedingungen, als auch über längere Zeiträume positiv beeinflußt wird.

Als basische Monomere, welche bei der Herstellung der erfindungsgemäß eingesetzten Acryl- bzw. Vinylcopolymeren verwendet werden können, zählen vorzugsweise die Ester der Acryl- bzw. Methacrylsäure mit sekundären oder tertiären Alkanolaminen, wie tert. Butylaminoethyl-(meth)acrylat, 2-Hydroxy-propylamino-2-hydroxy-propyl-(meth)acrylat, N,N-Dimethylaminoethyl(meth)acrylat, N,N-Dibutylamino-propyl(meth)acrylat, N,N-Dihydroxyethylaminoethyl(meth)acrylat oder N,N-Di-2-hydroxypropylamino-2-hydroxypropyl(meth)acrylat sowie andere Homologe oder Isomere dieser Verbindungen.

Diese Monomeren werden in einer Menge von 0,5 bis 5 Gew.-%, bezogen auf die Gesamtmenge der Monomere, eingesetzt. Die Herstellung der Copolymere erfolgt nach einer üblichen, dem Fachmann bekannten Methode der Lösungspolymerisation.

Als Komponente (B) werden die in der EP-A1-0 133 949 beschriebenen wasserlöslichen Alkydharze bzw. Polyesterharze eingesetzt. Bevorzugte Harze dieser Gruppe sind nach Salzbildung wasserverdünnbare anionische, vinyl- und/oder acrylmodifizierte Alkydharze, deren Carboxylgruppen zu mindestens 80 % aus einpolymerisierten Einheiten von α, β-ungesättigten Mono- oder Dicarbonsäuren stammen.

Folgende Materialien werden in den Beispielen eingesetzt :

Komponente (A) : Physikalisch trocknende Beschichtungsmittel

P 2 : handelsübliches, pulverförmiges Vinylchlorid/Vinylacetat-Copolymerisat, Viskosität (20 %ig in Methylethylketon) 40 ± 10 mPa · s (z. B. HOSTAFLEX M 131, HOECHST AG) .

P 3 : handelsübliches, perlenförmiges Vinyltoluol/Acrylsäureester-Copolymerisat, Viskosität (30 %ig in Xylol) ca. 60 mPa · s (z. B. HOSTAFLEX LP 685 n, HOECHST AG)

P 5 : handelsübliches, thermoplastisches Acrylharz, 80 %ig in Xylol, empfohlen als Alleinbindemittel für Straßenmarkierfarben mit guter Dauerelastizität (z. B. VIACRYL SC 126, VIANOVA KUNSTHARZ AG)

P 6 : handelsübliches, niedrigviskoses, intern plastifiziertes PVC-Mischpolymerisat für chemikalienbeständige Anstriche ; Viskosität (20 %ig in Toluol) 20-30 mPa · s (z. B. HOSTAFLEX CM 620, HOECHST AG)

P10 : in bekannter Weise durch Lösungspolymerisation hergestelltes Copolymerisat aus Vinyltoluol, Isobutylmethacrylat und N,N-Dimethylaminoethylacrylat (69/29/2) ; 60 %ig in Xylol ; Grenzviskositätszahl (CHCl₃) : 37 ml/g.

P11 : in bekannter Weise durch Lösungspolymerisation hergestelltes Copolymerisat aus n-Butylacrylat, Styrol und tert.-Butylaminomethylmethacrylat (49,5/49,6/0,9) ; 70 %ig in Xylol ; Grenzviskositätszahl (CHCl₃) : 30 ml/g.

Komponente (B) : Wasserlösliches Harz

W 1 : handelsübliches, wasserlösliches, oxidativ trocknendes Alkydharz auf Basis spezieller nichtgilbender Fettsäuren ; Lieferform : neutralisiert, 65 %ig in einem Lösungsmittelgemisch ; Viskosität (verdünnt mit Butylglykol auf 50 %) 110-170 s DIN 53211/20 °C (z. B. RESYDROL VWA 24 L, VIANOVA KUNSTHARZ AG)

W 6 : in einem mit Rührwerk, Kühler, Thermometer und Zugabegefäßen austestatteten Reaktionsgefäß werden 450 Tle einer konjugierten technischen Linolsäure mit 280 Tlen Pentaerythrit, 230 Tlen p-tert.-Butylbenzoesäure und 180 Tlen Phthalsäureanhydrid auf 220 °C erhitzt und bei dieser Temperatur unter azeotroper Entfernung des Reaktionswassers (Schleppmittel Xylol) bis zu einer Säurezahl von weniger als 4 mg KOH/g verestert. Nach Verdünnung des Ansatzes mit Xylol auf einen Festkörpergehalt von 80 % werden 88 Tle dieser Vorproduktlösung mit 38 Tlen Methoxipropanol verdünnt und auf 120 °C erwärmt. Bei 120 °C werden innerhalb von 3 Stunden sowohl eine Mischung aus 19 Tlen Vinyltoluol, 10 Tlen Butylacrylat und 10 Tlen Methacrylsäure, als auch eine zweite Mischung aus 2 Tlen tert.-Butylperbenzoat und 10 Tlen Methoxipropanol gleichmäßig zugegeben. Nach Beendigung der Zugabe wird der Ansatz weitere 5 Stunden bei 120 °C gehalten. Die Harzlösung weist einen Festkörpergehalt von 61 %, eine Säurezahl von 64 mg KOH/g und eine Grenzviskositätszahl (CHCl₃, 20 °C) von 9 ml/g auf.

Komponente (C) : Weichmachungsmittel

WM1 : Weichmachungsmittel auf Basis Chlorparaffin (z. B. HORDAFLEX LC 40 flüssig, HOECHST AG) ;

Beispiele 12-17

Die Harzmischungen werden in der in der Tabelle 1 B angegebenen Zusammensetzung gemäß den im Stammpatent gemachten Angaben hergestellt.

Tabelle 1 B

| Beispiel | K O M P O N E N T E | | | zusätzl. Lösungsmittel | | Wasser | Neutralisationsmittel |
|---|---|---|---|---|---|---|---|
| | (A) | (B) | (C) | | | | |
| 12 | 50,4 P11 12,6 P2 | 16 W6 | 21 WM1 | 5,5 TB 51 X | | 100 | 1,0 A |
| 13 | 80 P10 8,9 P6 | 11 W6 | — | 6,3 CX 52 MIBK | | 120 | 2,3 A |
| 14 | 63 P10 | 16 W1 | 21 WM1 | 59 TB | | 100 | 1,3 A |
| 15 | 63 P11 | 16 W6 | 21 WM1 | 43 T | | 100 | 0,9 A |

3

# 0 184 734

(Fortsetzung)

| Beispiel | KOMPONENTE | | | | | zusätzl. Lösungsmittel | | Wasser | Neutralisations mittel | |
|---|---|---|---|---|---|---|---|---|---|---|
| | (A) | | (B) | | (C) | | | | | |
| 16(V) | 63 | P3 | 16 | W1 | 21 | WM1 | 43 | T | 88 | 1,9 A |
| 17(V) | 63 | P5 | 16 | W6 | 21 | WM1 | 2,4 | CX | 100 | 1,8 A |
| | | | | | | | 22 | MIBK | | |

(V) = Vergleichsversuch
TB Testbenzin
X Xylol
CX Cyclohexanon
MIBK Methylisobutylketon
A Ammoniaklösung (konz.)

In der Tabelle 2 B sind die Zusammensetzungen der aus den Bindemittelkombinationen gemäß Tabelle 1 B hergestellten Überzugsmittel angegeben.

### Tabelle 2 B

| Harzlsg. gem.TAB 1B | aus Beisp. | (a) | (b) | (c) | (d) | (e) | (f) |
|---|---|---|---|---|---|---|---|
| 257,5 | 12 | 6 | 2 | 100 | 80 | 210 | 60 |
| 280,5 | 13 | 6 | 2 | 100 | 40 | 140 | 120 |
| 260,3 | 14 | 6 | 2 | 50 | — | 250 | — |
| | | | | 50(g) | | | |
| 243,9 | 15 | 6 | 2 | 100 | 80 | 110 | — |
| 232,9 | 16 (V) | 6 | 2 | 100 | 80 | 200 | 70 |
| 226,2 | 17 (V) | 6 | 2 | 100 | 80 | 200 | 70 |

(a) handelsübliches Netzmittel, 10 %ige wäßrige Lösung auf Basis N-Polyphosphat (z. B. CALGON, BENCKISER-KNAPPSACK)

(b) handelsübliches Netzmittel auf Basis eines Ammoniumsalzes einer niedermolekularen Polyacrylsäure, 30 % Festgehalt (z. B. Additol XW 330, VIANOVA KUNSTHARZ AG)

(c) Titandioxid Rutil-Type

(d) Silicat-Füllstoff, durchschnittliche Teilchengröße 2-15 $\mu$m (z. B. CELITE 281, JOHNS-Manville)

(e) Calcit Füllstoff, ca. 5 $\mu$m mittlere Korngröße

(f) Calcit Füllstoff, ca. 15 $\mu$m mittlere Korngröße

(g) Eisenoxidrot

TAB 3 B zeigt die Ergebnisse von Prüfungen bei verschiedenen Verwendungsarten der erfindungsgemäßen Produkte. Dabei werden die gemäß TAB 2 B hergestellten Überzugsmittel mit Wasser auf die Verarbeitungsviskosität eingestellt. Die Ausprüfung erfolgt, soweit nicht anders angegeben, auf Asbestzementplatten bei Trockenfilmschichten von ca. 150 $\mu$m, nachdem die beschichteten Platten 7 Tage bei Raumtemperatur gelagert wurden.

(Siehe Tabellen Seite 5 ff.)

Tabelle 3 B

| B | ANWEN-DUNG | VERARBEIT-BARKEIT (a) | Durchtrock-nung ca. 250 μm Naßfilm | SPANPROBE DIN 53155 | GITTERSCHNITT DIN 53151 | KUGELSTRAHL-VERSUCH DIN 53154 KUGELN | LAGERPRÜFUNG 14Tge/ 40°C | 2 Monate/ RT |
|---|---|---|---|---|---|---|---|---|
| 12 | STRA | i.0. | 17 min. | 1 | Gt 2 | 9000 | OP | LT |
| 13 | FAS | i.0. | 44 min. | 2 | Gt 2 | 6000 | LT | LT |
| 14 | FAS | i.0./LS | 34 min. | 2 | Gt 2 | 9000 | KL | KL |
| 15 | STRA | i.0. | 31 min | 1 – 2 | Gt 1 | 9000 | KL | KL |
| 16(V) | STRA | i.0./LP | 35 min. | 3 | Gt 3 | 6000 | ST, LP | ST, LP |
| 17(V) | STRA | völlige Trennung; nicht verarbeitbar | | | | | | |

STRA Straßenmarkierfarbe                                      RT Raumtemperatur
FAS Fassadenfarbe                                                      KL klar
(a) geprüft nach 14 Tagen Lagerung bei Raumtemperatur       OP Opaleszenz
i.0. in Ordnung                                              LT leichte Trübung
LP leichte Phasentrennung                                   ST starke Trübung

Tabelle 4 B

| B | WASSERLAGERUNG 7 Tage/25°C | FEUCHTSCHRANK DIN 50017 7 Tage | FREIBEWIT-TERUNG 3 Monate | ANTRIEB-TEST TABER-ABRASER (b) | WASSERDAMPF-DURCHLÄSSIG-KEIT 0 %/55 % Luft-feuchtigk.23°C | UV.Test "SUN-TEST"(c) 7 Tage |
|---|---|---|---|---|---|---|
| 12 | unverändert | unverändert | unverändert | 55 | — | unverändert |
| 13 | 1. Quellung | unverändert | unverändert | — | 1,5 g/m²h | unverändert |
| 14 | unverändert | unverändert | unverändert | — | 1,5 g/m²h | sehr geringe Aufhellung |
| 15 | 1. Quellung | 1. Quellung | unverändert | 47 | — | sehr geringe Kreidung |
| 16(V) | unverändert | 1. Quellung | unverändert | 45 | — | — |
| 17(V) | keine Prüfung | | | | | |

(b) Modell 503
Abrieb im mg nach 1 000 Umdrehungen mit CS 10 CALIBRASE/500 g
Prüfstück Eisenblech mit 100 $\mu$m Trockenfilm
(c) Xenonstrahler Beleuchtungsstärke : 150 klx,

Abstand ca. 230 mm
Bestrahlungsstärke : 830 W/m²
Schnellbelichtungstischgerät der Fa. « Original Hanau/Heraeus »

## 0 184 734

**Patentansprüche**

1. Verfahren zur Herstellung wasserverdünnbarer Beschichtungsmittel für mineralische und bituminöse Untergründe, insbesonders für die Herstellung von Straßenmarkierungen und die Beschichtung von Fassaden, wobei man eine Mischung aus

(A) mindestens 30 Gew.-%, vorzugsweise 50-75 Gew.-% eines physikalisch trocknenden Polymeren, vom Typ der Acryl- und/oder Vinylcopolymeren, Chlor- oder Cyclokautschuk oder bituminösen Massen,

(B) 10-50, vorzugsweise 15-25 Gew.-% eines nach Salzbildung mit Basen bzw. Säuren wasserlöslichen, oxidativ trocknenden Alkydharzes und/oder eines Acryl- und/oder eines Vinylcopolymeren und/oder eines Epoxid-Amin-Adduktes und gegebenenfalls

(C) 15-35, vorzugsweise 20-30 Gew.- eines Weichmachungsmittels,
gegebenenfalls nach Zusatz eines organischen, vorzugsweise nichtwassermischbaren Lösungsmittels in eine homogene Phase überführt, in 80-250, vorzugsweise 90-120 Gew.-% (bezogen auf das eingesetzte Festharz) Wasser emulgiert und die salzbildenden Gruppen der Komponente (B) mit Basen bzw. Säuren neutralisiert, wobei das Verhältnis zwischen der Summe der Komponenten (A) + (C) und der Komponente (B) zwischen 8,5 : 1 und 1,5 : 1, vorzugsweise zwischen 6,5 : 1 und 3 : 1 liegt, dadurch gekennzeichnet, daß man als Komponente (A) nichtwasserverdünnbare organische Polymere vom Typ der Acryl- und/oder Vinylcopolymeren, welche 0,5 bis 5 Gew.-% basische Gruppen aufweisende Monomerbausteine im Molekül enthalten, allein oder zusammen mit Chlor- oder Cyclokautschuk oder bituminöse Massen einsetzt.

2. Wasserverdünnbare Beschichtungsmittel nach Anspruch 1, dadurch gekennzeichnet, daß man als Komponente (B) nach Salzbildung wasserverdünnbare, anionische, vinyl- und/oder acrylmodifizierte Alkykharze, deren Carboxylgruppen zu mindestens 80 % aus einpolymerisierten Einheiten von α, β-ungesättigten Mono- oder Dicarbonsäuren stammen, einsetzt.

**Claims**

1. Process for producing water dilutable, coatings for mineral and bituminous substrates, particularly for the production of road markings and facade coatings, wherein a blend of

(A) at least 30 % by weight, preferably 50-75 % by weight of a physically drying polymer of the type of acryl and/or vinyl copolymers, chloro- or cyclised rubber or bituminous substances,

(B) 10-50, preferably 15-25 % by weight of an oxidising alkyd resin, water soluble through salt formation with bases or acids and/or an acryl and/or vinyl copolymer and/or an epoxy-amine adduct, and, optionally;

(C) 15-35, preferably 20-30 % by weight of a plasticiser,
optionally after addition of an organic, preferably water-immiscible solvent is transferred into a homogeneous phase, is emulsified in 80-250, preferably 90-120 % by weight (calculated on the resin solids used) of water and the salt-forming groups of component (B) are neutralised with bases or acids, the ratio between the sum of components (A) + (C) and component (B) lying between 8.5 : 1 and 1.5 : 1, preferably 6.5 : 1 and 3 : 1, characterised in that as component (A) organic polymers not dilutable with water of the tye of acryl and/or vinyl copolymers containing 0.5 to 5 % by weight in the molecule of monomeric constituents carrying basic groups are used alone or in conjunction with chlororubber or cyclised rubber or bituminous masses.

2. Water dilutable coating compositions according to claim 1, characterised in that as component (B) anionic vinylated and/or acrylated alkyd resins water dilutable upon salt formation are used, the carboxy groups of which, to an extent of at least 80 %, are stemming from copolymerized units of alpha-beta-unsaturated mono- or dicarboxylic acids.

**Revendications**

1. Procédé pour l'élaboration de revêtements diluables dans l'eau pour des supports minéraux et bitumineux, notamment pour la préparation de produits de marquage routier et de revêtement de façades, par transformation d'un mélange constitué par

(A) au moins 30 % en poids, de préférence 50-75 % en poids d'un polymère séchant physiquement, du type des copolymères acryliques et/ou vinyliques, du chloro ou cyclocaoutchouc ou des masses bitumineuses,

(B) 10-50, de préférence 15-25 % en poids d'une résine alkyde soluble dans l'eau après salification avec des bases ou des acides, séchant par oxydation et/ou d'un copolymère acrylique et/ou vinylique et/ou d'un composé d'addition époxy-amine et le cas échéant,

(C) 15-35, de préférence 20-30 % en poids d'un plastifiant,
en une phase homogène, le cas échéant après addition d'un solvant organique de préférence non miscible à l'eau, par émulsification en une phase homogène dans 80-250, de préférence 90-120 % en poids d'eau (par rapport à la résine solide mise en œuvre) et par neutralisation des groupes salifiables du

7

**0 184 734**

compospant (B) avec des bases ou des acides, le rapport entre la somme des composants (A) + (C) et le composant (B) se situant entre 8,5 : 1 et 1,5 : 1, de préférence entre 6,5 : 1 et 3 : 1, caractérisé en ce que l'on met en œuvre en tant que composant (A), seuls ou conjointement avec du chloro- ou cyclocaoutchouc ou des masses bitumineuses, des polymères organiques non diluables dans l'eau du type des copolymères acryliques et/ou vinyliques, qui contiennent dans la molécule 0,5 à 5 % en poids d'éléments constitutifs monomères présentant des groupes basiques.

2. Produits de revêtement diluables dans l'eau selon la revendication 1, caractérisés en ce que l'on met en œuvre en tant que composant (B) des résines alkydes vinyl- ou acryl modifiées, anioniques, diluables dans l'eau après salification, dont les groupes carboxyle jusqu'à concurrence d'au moins 80 % proviennent de motifs introduits par polymérisation d'acides α, β mono ou dicarboxyliques insaturés.